# EUROPÄISCHE PATENTANMELDUNG

(11) **EP 2 105 281 A1**
(43) Veröffentlichungstag der Anmeldung: **30.09.2009**
(21) Anmeldenummer: 09002985.1
(22) Anmeldetag: 03.03.2009
(51) Int. Cl.: B29C 65/08, B26D 7/08

(54) **Vorrichtung zum Schweißen und/oder Schneiden von Werkstücken, insbesondere flächigen Werkstücken**

(30) Priorität: 26.03.2008 DE 102008016916
(71) Anmelder: Widmann Maschinen e.K., 73278 Schlierbach (DE)
(72) Erfinder: Kachel, Günther, 73033 Göppingen (DE); Graß, Werner, 73660 Urbach (DE)
(74) Vertreter: Steimle, Josef

(57) **Zusammenfassung**

Die Erfindung betrifft eine Vorrichtung zum Schweißen und/oder Schneiden von flächigen Werkstücken (60) mittels mehrerer, einen Sonotrodenteppich bildender Sonotroden (26) und einem Gegenwerkzeug (30), wobei das Werkstück zwischen dem Sonotrodenteppich und dem Gegenwerkzeug bearbeitet wird, wobei zwischen dem Sonotrodenteppich und dem Werkstück eine Metallplatte (56,58) angeordnet ist.

## Beschreibung

Die Erfindung betrifft eine Vorrichtung zum Schweißen und/oder Schneiden von Werkstücken, insbesondere von flächigen Werkstücken, mittels Ultraschall, wobei die Vorrichtung mehrere, einen Sonotrodenteppich bildende Sonotroden und ein Gegenwerkzeug aufweist und das Werkstück zwischen dem Sonotrodenteppich und dem Gegenwerkzeug bearbeitet wird.

Es ist allgemein bekannt, dass Werkstücke mittels einer Heißsiegelvorrichtung miteinander verbunden werden. Dabei ist einem Schweißstempel eine Heizeinrichtung zugeordnet, über welche dem Werkstück im Bereich von Schweiß- und/oder Schneidkanten so lange Wärme zugeführt wird, bis diese plastifiziert sind und der Bearbeitungsvorgang durchgeführt werden kann. Als nachteilig wird nicht nur die einseitige Wärmezufuhr angesehen, sondern auch die hierfür erforderliche relativ lange Zeitdauer für den Bearbeitungsschritt, weshalb derartige Vorrichtungen nur geringe Taktzeiten zulassen.

Ein anderes Verfahren sieht vor, die erforderliche Energie zum Plastifizieren des Werkstoffes mittels Ultraschall in das Werkstück einzubringen. Hierfür bedarf es einer Ultraschallsonotrode und eines Gegenwerkzeugs, zwischen welchen das Werkstück bearbeitet wird. Aus der DE 43 13 875 A1 ist eine Vorrichtung zum Bearbeiten von flächigen Werkstücken bekannt, wobei auf der einen Seite des Werkstücks mehrere, einen Sonotrodenteppich bildende Ultraschallsonotroden anliegen und sich das Werkstück an einem Gegenwerkzeug, welches die Schneid- und/oder Schweißkonturen aufweist, abstützt. Um optimale Schweißergebnisse erzielen zu können und/oder um das Werkstück vollständig durchtrennen zu können, müssen die Sonotroden exakt zueinander ausgerichtet werden, so dass sie eine ebene Fläche bilden und keinen Versatz zueinander aufweisen. Da die Sonotroden jeweils einzeln angesteuert werden und zueinander auf Abstand angeordnet sind, ist dies nicht immer möglich.

Der Erfindung liegt daher die Aufgabe zugrunde, eine Vorrichtung bereitzustellen, mit welcher bessere Arbeitsergebnisse bei einer Vorrichtung der eingangs genannten Art erzielt werden können und die hohe Taktzahlen erlaubt.

Diese Aufgabe wird erfindungsgemäß dadurch gelöst, dass zwischen dem Sonotrodenteppich und dem Werkstück eine Metallplatte angeordnet ist.

Bei der erfindungsgemäßen Vorrichtung wirkt der Sonotrodenteppich nicht direkt auf das Werkstück ein, sondern es ist eine Metallplatte zwischengeschaltet, welche sich am Sonotrodenteppich und somit an den einzelnen Ultraschallsonotroden abstützt und am Werkstück anliegt. Diese Metallplatte hat die Aufgabe, Toleranzen und Fehlausrichtungen sowie Unterschiede in der Energiezufuhr der einzelnen Ultraschallsonotroden des Sonotrodenteppichs auszugleichen, so dass die über den Sonotrodenteppich dem Werkzeug zugeführte Schweiß- oder Bearbeitungsenergie über die Metallplatte gleichmäßig auf das Werkstück aufgegeben, beziehungsweise in das Werkstück eingeleitet wird. Mit der erfindungsgemäßen Vorrichtung können sowohl flächige Werkstücke als auch unebene Werkstücke, z.B. Blisterverpackungen bearbeitet werden.

Bei einer Weiterbildung der Erfindung ist vorgesehen, dass die Metallplatte fliegend oder schwimmend gehalten oder gelagert ist. Dies bedeutet, dass die Metallplatte zwar in einem Rahmen sitzt, die Seitenkanten jedoch einen Abstand zum Rahmen aufweisen, so dass die Metallplatte keine Dämpfung durch den Rahmen erfährt und die durch die Sonotroden aufgezwungene Ultraschallschwingung ausführt. Die Metallplatte kann sowohl in ihrer Ebene als auch senkrecht zu dieser Ebene Bewegungen ausführen.

Vorteilhaft überdeckt die Metallplatte mindestens eine Ultraschallsonotrode des Sonotrodenteppichs. Insbesondere erstreckt sich die Metallplatte über die Hälfte des Sonotrodenteppichs und in bevorzugter Weise über den gesamten Sonotrodenteppich. Auf diese Weise wird ein möglicher Versatz der einzelnen Ultraschallsonotroden zueinander, welcher im Mikrometerbereich liegen kann, ausgeglichen.

Eine optimale Bearbeitung des Werkstücks wird dadurch erreicht, dass die Metallplatte eigensteif ist. Hierdurch wird gewährleistet, dass die Metallplatte während des Bearbeitungsvorganges über den Sonotrodenspitzen einen Schwebezustand auf einem Luftpolster einnimmt, der durch den Rayleigh'schen Schalldruck erzeugt wird. Insbesondere wird dies dadurch erreicht, dass die Metallplatte aus einem härtbaren Material besteht und gehärtet ist. Alternativ oder zusätzlich kann die Metallplatte aus einem walzbaren Material bestehen und ist gewalzt. Hierdurch wird nicht nur die geforderte Oberflächengüte geschaffen, sondern das Material wird auch verdichtet und kalibriert. Die Oberflächengüte kann zusätzlich noch verbessert werden, indem diese geschliffen wird.

Mit Vorzug besitzt die Metallplatte eine Dicke von 0,2 mm bis 2 mm, insbesondere eine Dicke von 0,4 mm bis 1 mm und bei einem Ausführungsbeispiel weist die Metallplatte eine Dicke von 0,8 mm auf. Diese Dicke von 0,8 mm ist ein optimaler Kompromiss zwischen Gewicht der Platte, Eigensteifigkeit und Dämpfungsverhalten, so dass die Ultraschallenergie nahezu verlustlos auf das Werkstück übertragen wird.

In bevorzugter Weise besteht die Metallplatte aus einem Stahlblech oder aus Edelstahl.

Um den direkten Kontakt zwischen der Metallplatte und den Sonotrodenspitzen während des Bearbeitungsvorganges zu vermeiden und zusätzlich die Geräuschentwicklung während des Bearbeitungsvorganges zu reduzieren, ist erfindungsgemäß eine Dämpfungslage zwischen dem Sonotrodenteppich und der Metallplatte angeordnet. Diese Dämpfungslage ist relativ zur Metallplatte elastisch, jedoch weist sie eine wesentlich geringere Dicke, insbesondere eine um den Faktor 10 geringere Dicke, auf. Dabei kann die Dämpfungslage zum Beispiel aus einer Kunststofffolie oder aus Papier bestehen. Insbesondere besitzt die Dämpfungslage eine Dicke von 0,01 mm bis 0,5 mm, bevorzugt 0,1 mm. Die Dämpfungslage kann als separate Lage ausgebildet sein, sie kann aber auch direkt mit der dem Sonotrodenteppich zugewandten Seite der Metallplatte verbunden sein.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine perspektivische Ansicht der erfindungsgemäßen Vorrichtung bei abgesenktem Werkzeug; und
- Figur 2: eine Seitenansicht der Vorrichtung bei angehobenem Werkzeug.

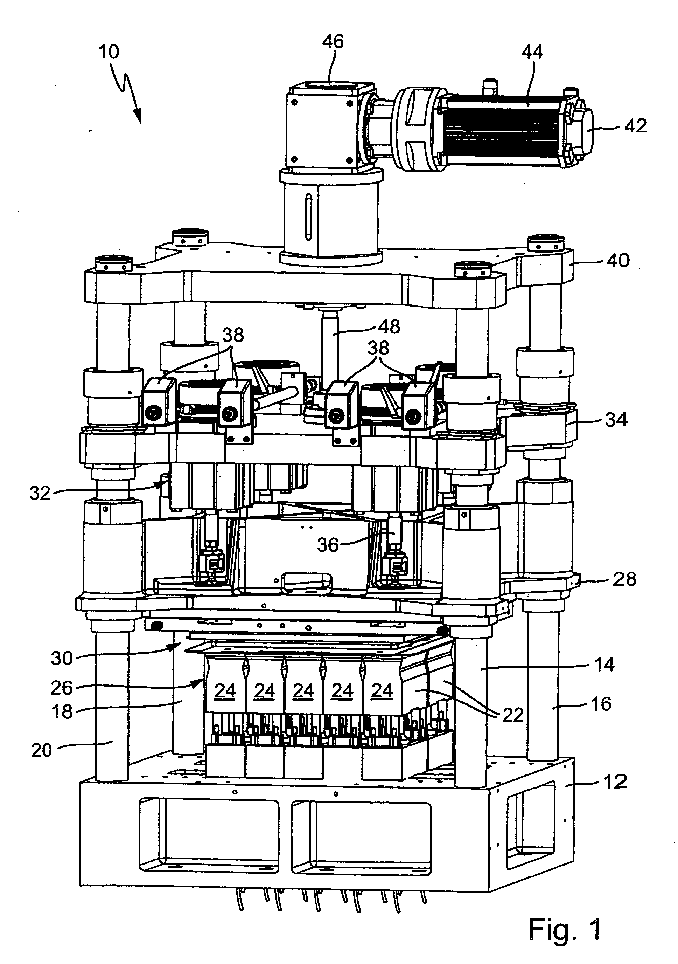

In der Figur 1 ist die Vorrichtung insgesamt mit 10 bezeichnet und weist eine massive Pressengrundplatte 12 auf, in deren Eckbereichen jeweils eine vertikal nach oben abragende Säule 14, 16, 18 und 20 angeordnet ist. Auf der Pressengrundplatte sind außerdem zwei Ultraschallsonotrodenreihen 22 montiert, die jeweils aus fünf nebeneinander stehenden Blocksonotroden 24 aufgebaut sind. Die insgesamt zehn Blocksonotroden 24 bilden einen insgesamt mit 26 bezeichneten Sonotrodenteppich oder Sonotrodentisch.

Oberhalb des Sonotrodenteppichs 26 befindet sich ein unterer Pressenbär 28, an welchem ein Werkzeugpaket 30 montiert ist. Der untere Pressenbär 28 ist über vier Pneumatikeinrichtungen mit Pneumatikzylindern 32 mit einem oberen Pressenbär 34 verbunden, wobei die Pneumatikzylinder 32 selbst am oberen Pressenbär 34 und die aus den Pneumatikzylindern 32 herausragenden Kolben 36 am unteren Pressenbär 28 angreifen. Die Eintauchtiefe der Kolben 36 in die Pneumatikzylinder 32 wird von Sensoren 38 überwacht.

Die Säulen 14 bis 20 enden in einer Deckplatte 40, auf deren Oberseite eine Antriebseinheit 42 mit Servomotor 44, Getriebe 46 und Rollengewindetrieb 48 montiert ist. Über den Rollengewindetrieb 48 kann der obere Pressenbär 34 entlang der Säulen 14 bis 20 verstellt und in Richtung auf den Sonotrodenteppich 26 zugestellt werden, bis das Werkzeugpaket 30 aufsitzt. Die Kolben 36 tauchen dann geringfügig in die Pneumatikzylinder 32 ein. Das Werkzeugpaket 30 wird also pneumatisch gegenüber dem Sonotrodenteppich 26 abgestützt.

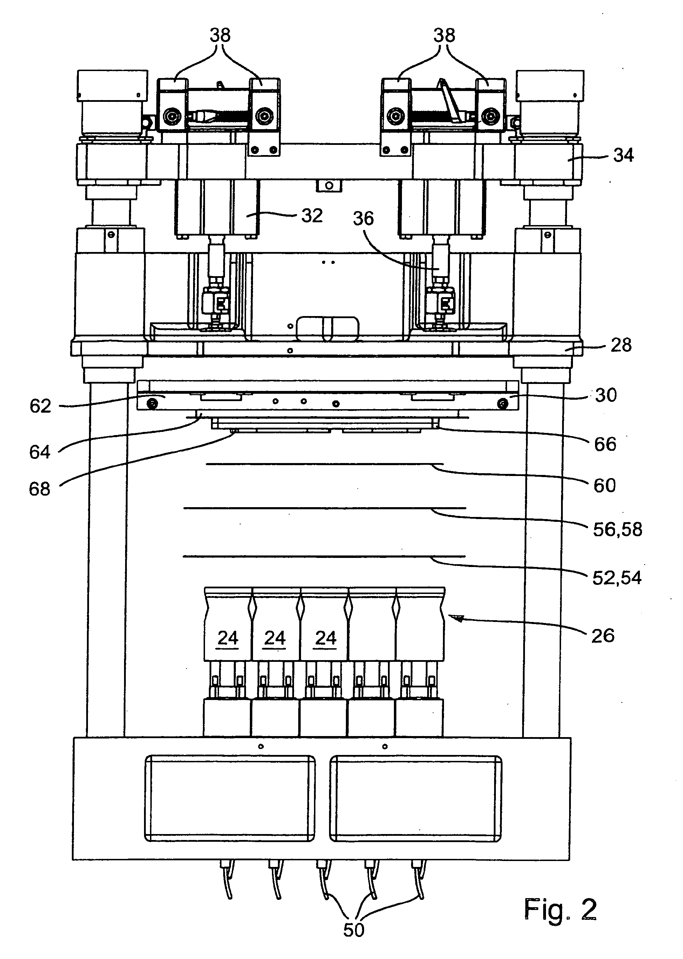

In der Figur 2 sind die Anschlüsse 50 der Blocksonotroden 24 erkennbar, die von der Pressengrundplatte 12 nach unten weggeführt werden. Oberhalb des Sonotrodenteppichs 26 befindet sich eine als Dämpfungslage 52 dienende Zwischenlage 54 aus Papier, oberhalb der eine als Schweißunterlage 56 dienende Metallplatte 58 angeordnet ist. Das Werkstück, zum Beispiel eine ein- oder mehrlagige Kunststofffolie, ist mit 60 bezeichnet. Oberhalb dieses Werkstücks 60 befindet sich das Werkzeugpaket 30, welches von einer Isolierplatte 62, einer Temperierplatte 64 und einem Trennschweißwerkzeug 66 mit Schneidkanten 68 gebildet wird. Diese Schneidkanten 68 können durch Schweiß- und/oder Biegelinien ergänzt werden.

Aus Figur 2 ist erkennbar, dass die Metallplatte 58 alle Blocksonotroden 24 übergreift und jeglichen Versatz oder jede Fehllage ausgleicht. Diese Metallplatte 58 schwimmt praktisch während des Bearbeitungsvorganges auf den Blocksonotroden 24 und dient als Gegenlager für das Trennschweißwerkzeug 66.

## Patentansprüche

1. Vorrichtung (10) zum Schweißen und/oder Schneiden von Werkstücken (60), insbesondere von flächigen Werkstücken (60), mittels Ultraschall, wobei die Vorrichtung mehrere, einen Sonotrodenteppich (26) bildende Ultraschallsonotroden (24) und ein Gegenwerkzeug (30) aufweist und das Werkstück (60) zwischen dem Sonotrodenteppich (26) und dem Gegenwerkzeug (30) bearbeitet wird, **dadurch gekennzeichnet, dass** zwischen dem Sonotrodenteppich (26) und dem Werkstück (60) eine Metallplatte (58) angeordnet ist.

2. Vorrichtung nach Anspruch 1, **dadurch gekennzeichnet, dass** die Metallplatte (58) fliegend oder schwimmend gehalten ist.

3. Vorrichtung nach einem der vorhergehenden Ansprüche, **dadurch gekennzeichnet, dass** die Metallplatte (58) mindestens eine Ultraschallsonotrode (24) des Sonotrodenteppichs (26) überdeckt.

4. Vorrichtung nach einem der vorhergehenden Ansprüche, **dadurch gekennzeichnet, dass** die Metallplatte (58) die Hälfte aller Ultraschallsonotroden (24), insbesondere alle Ultraschallsonotroden (24) des Sonotrodenteppichs (26), überdeckt.

5. Vorrichtung nach einem der vorhergehenden Ansprüche, **dadurch gekennzeichnet, dass** die Metallplatte (58) eigensteif ist.

6. Vorrichtung nach einem der vorhergehenden Ansprüche, **dadurch gekennzeichnet, dass** die Metallplatte (58) aus einem härtbaren Material besteht und gehärtet ist.

7. Vorrichtung nach einem der vorhergehenden Ansprüche, **dadurch gekennzeichnet, dass** die Metallplatte (58) aus einem walzbaren Material besteht und gewalzt ist.

8. Vorrichtung nach einem der vorhergehenden Ansprüche, **dadurch gekennzeichnet, dass** die Metallplatte (58) geschliffen ist.

9. Vorrichtung nach einem der vorhergehenden Ansprüche, **dadurch gekennzeichnet, dass** die Metallplatte (58) eine Dicke von 0,2 mm bis 2 mm, insbesondere von 0,4 mm bis 1 mm und bevorzugt von 0,8 mm, aufweist.

10. Vorrichtung nach einem der vorhergehenden Ansprüche, **dadurch gekennzeichnet, dass** die Metallplatte (58) aus Stahlblech oder Edelstahl besteht.

11. Vorrichtung nach einem der vorhergehenden Ansprüche, **dadurch gekennzeichnet, dass** zwischen dem Sonotrodenteppich (26) und der Metallplatte (58) eine Dämpfungslage (52) angeordnet ist.

12. Vorrichtung nach Anspruch 11, **dadurch gekennzeichnet, dass** die Dämpfungslage (52) eine Kunststofffolie oder Papier ist.

13. Vorrichtung nach Anspruch 11 oder 12, **dadurch gekennzeichnet, dass** die Dämpfungslage (52) eine Dicke von 0,01 mm bis 0,2 mm, insbesondere von 0,1 mm, aufweist.
